# EUROPEAN PATENT APPLICATION

(11) **EP 1 821 535 A2**
(43) Date of publication of application: **22.08.2007**
(21) Application number: 07102682.7
(22) Date of filing: 20.02.2007
(51) Int. Cl.: H04N 5/76

(54) **Recording/reproducing apparatus**

(30) Priority: 21.02.2006 JP 2006044023
(71) Applicant: ORION ELECTRIC CO., Ltd., Fukui 915-8555 (JP)
(72) Inventor: Hayashi, Yasuhiro, Echizen-city, Fukui 915-8555 (JP)
(74) Representative: TBK-Patent

(57) **Abstract**

The dead storage of recorded programs stored in a storage device of a recording/reproducing apparatus is minimized to achieve an effective use of the recorded programs.

At power-on, the recording/reproducing apparatus (1a) endlessly reproduces the recorded programs from a HDD (15) till power-off, while giving priority to the control of video recording and reproducing operations. A reproducing start position controller (17a) overwritably stores the reproducing end position of the endless reproducing at power-off, and sets the reproducing start position of the next endless reproducing to the previous by stored reproducing end position. When a free channel is selected as a receiver channel, a monitor output controller (9) provides monitor outputs of the recorded program subjected to the endless reproducing instead of outputting signals received on the free channel, whereby the recorded program is displayed.

## Description

### BACKGROUND OF THE INVENTION

### 1. Field of the Invention

The present invention relates to a recording/reproducing apparatus having functions to receive television broadcasts and to record or reproduce the received television programs and the like, and operating to record and store the television programs and the like in a storage device.

### 2. Description of the Related Art

Heretofore, analog-type video tape recorders using video tapes as a storage device have been predominant as the recording/reproducing apparatus of this type. With the recent progress of digital processing technologies, digital-type video recorders are becoming mainstream, the recorders using, as the storage device, a mass recording medium such as a hard disk drive (hereinafter, referred to as "HDD") and an overwritable digital video (versatile) disk (hereinafter, referred to as "DVD"). Some of the video recorders use, as the storage device, plural recording media including the all or some of the aforesaid video tapes, HDDs, DVDs and the like.

These recording/reproducing apparatuses perform a normal recording operation or a timer recording operation based on an electronic program guide (EPG) or the like, so as to record the received television programs, externally inputted programs and the like and to store the recorded programs in the storage device. Based on a reproducing operation, the apparatuses reproduce the recorded programs from the storage device.

The recording/reproducing apparatus is shifted from a so-called television mode to a video record mode or a reproducing mode during the video recording operation or the reproducing operation.

In the television mode, image monitor output and audio monitor output of a television program on a selected receiver channel are outputted. When shifted to at least the reproducing mode, the apparatus preferentially provides the image and audio monitor outputs of a recorded program, as reproducing the program from the storage device. In the video record mode, the apparatus operates based on monitor output settings or the like, either preferentially providing the image and audio monitor outputs of a program being recorded in the storage device or preferentially providing the image and audio monitor outputs of a program received on a selected channel irrespective of the video recording operation.

In a case where the recording/reproducing apparatus is configured as a so-called standalone apparatus, the monitor outputs are supplied to an external monitor unit, such as a liquid crystal television monitor or plasma television monitor, connected with the recording/reproducing apparatus so as to be displayed on a monitor screen. In a case where the recording/reproducing apparatus is configured a complex apparatus incorporating therein the liquid crystal television monitor or plasma television monitor, the monitor outputs are supplied to the built-in liquid crystal television monitor or plasma television monitor so as to be displayed on the monitor screen.

In the recording/reproducing apparatus of this type, the recorded programs in the storage device include programs once recorded but never viewed and programs once viewed during the time of recording. Such programs increase with the increase of the programs stored in the storage device.

There is a general tendency that the already recorded program is not reproduced unless a user positively has it in mind to watch the program. This tendency is particularly notable in the aforesaid digital-type video recorders which are adapted for long-time video recording so as to store a large number of recorded programs.

On the other hand, there is a general tendency that the user frequently selects television channels in the television mode by unconsciously repeating channel changing operations.

In the recording/reproducing apparatus designed to store the received television programs by automatically recording the programs in the HDD or the like, the following proposal has been made in order to prevent a so-called dead storage of the programs recorded in the HDD or the like. That is, each of the received television programs is recorded in the HDD or the like as classified into any one of the specific categories. A virtual channel (free channel) unused for receiving television broadcast is assigned to each of the categories. A video program schedule specifying reproducing times of the recorded programs is generated on a per-virtual-channel basis (per-category basis). When any one of the virtual channels is selected by changing the television receiver channels or such, the apparatus may reproduce recorded programs of interest and displays the programs on the monitor screen according to a corresponding one of the video program schedules. (See, for example, Japanese Unexamined Patent Publication No.2001-333358.)

### SUMMARY OF THE INVENTION

A system of the above patent document has the following problems. The first problem is as follows. The system utilizes free television-broadcast channels as the virtual channels so that the recorded programs may be reproduced for viewing according to the channel selections as if the programs were broadcast programs on such channels. However, the system requires the generation of a schedule based on which the recorded programs are reproduced from the HDD or the like. When the virtual channel is selected, the system is also required to retrieve a recorded program corresponding to a time slot of the schedule before the program of interest is reproduced for viewing. Therefore, the system is increased in cost because the system requires a complicated processing for managing the reproducing times of the programs according to the schedule. Depending upon a relation between the time slots of the schedule and the time when the virtual channels are selected, some particular recorded programs are solely reproduced for viewing. In an extreme case, the selection of the virtual channel necessarily results in the reproducing and display of the same recorded program. In addition, the user may have to take care of some other task during the reproducing of the recorded program on the selected virtual channel. The user may turn off the system to pause the reproducing of the program. Subsequently when the user finished with the task turns on the system and select the virtual channel, any other recorded program may be reproduced due to the passage of time unless the user makes special settings before pausing reproducing. Hence, the user may be dissatisfied with being unable to resume the reproducing of the paused program. This leads to a fear that the user will not select the virtual channels any more. As a result, the system fails to provide an effective use of the recorded programs by preventing the dead storage of the recorded programs in the HDD or the like.

The second problem is as follows. The system has the constitution wherein the free television-broadcast channels are utilized as the virtual channels. Therefore, there may occur an event where none of the virtual channels is selected in a case where the change of channels is made in the aforesaid television mode as skipping the free channels based on channel skip settings or the like. Thus, the system may fail to provide the effective use of the recorded programs by preventing the dead storage of the recorded programs in the HDD or the like.

The invention is directed to the effective use of the recorded programs stored in the storage device by decreasing the dead storage of the recorded programs in the storage device as much as possible. More specifically, in the constitution wherein the recorded programs stored in the storage device are reproduced and displayed using the free television-broadcast channels, it is a first object to provide a simple and low-cost constitution for solving the first problem encountered by the system of the above patent document, thereby to provide the effective use of the recorded programs in the storage device by decreasing the dead storage of the recorded programs in the storage device as much as possible. It is a second object to enable the reproducing and display of each of the recorded programs in the storage device in the case where the change of channels is made as skipping the free channels, as well, thereby solving the second problem of the system of the above patent document. Thus is provided the effective use of the recorded programs in the storage device by decreasing the dead storage of the recorded programs in the storage device as much as possible.

According to the invention for achieving the first object, a recording/reproducing apparatus having functions to receive television broadcasts and to record or reproduce the received television programs and the like, and operating to record and store the received television programs and the like in a storage device and to provide monitor outputs of the received television programs on a selected channel as giving priority to at least reproducing monitor outputs, the apparatus comprises: a recorded-program reproducing controller activated at power-on and endlessly reproducing the recorded programs from the storage device till power-off, as giving priority to the control of video-recording and reproducing operations; a reproducing start position controller overwritably storing a reproducing end position of the endless reproducing at the power-off and setting a reproducing start position of the endless reproducing to the previous reproducing end position so stored; and a monitor output controller which, in response to the selection of a free channel as a receiver channel, provides monitor outputs of the recorded programs subjected to the endless reproducing instead of outputting reception signals on the free channel.

According to the first aspect of the invention wherein the free television-broadcast channel is utilized for display of the recorded programs reproduced from the storage device, when a power-on operation is performed, the recorded-program reproducing controller endlessly reproduces the recorded programs from the storage device till power-off, as giving priority to the control of normal video-recording and reproducing operations based on the manipulation of the apparatus, timer setting or the like. If the free channel is selected as the receiver during channel the endless reproducing, the monitor output controller provides the monitor outputs of the recorded programs subjected to the endless reproducing instead of outputting reception signals on the free channel, whereby the recorded programs are displayed on the monitor screen.

When a power-off operation is performed, the reproducing start position controller overwritably stores the reproducing end position of the endless reproducing at the power-off and starts the endless reproducing from the previous reproducing end position when the subsequent power-on operation is performed.

The recorded programs in the storage device are subjected to the endless reproducing continuing from the power-on of the apparatus to the power-off thereof and are sequentially reproduced in repetitious fashion starting from a recorded program corresponding to the previous reproducing end position. Therefore, if the free channel is selected as the receiver channel during the endless reproducing, the monitor outputs are switched to those of a recorded program currently reproduced, so that the recorded program is displayed on the monitor screen as if the program were broadcast on the free channel.

In this case, the low-cost and simple constitution negates the need for the complicated processing for generating the aforesaid schedule and for managing the reproducing times of the programs according to the schedule, and permits the recorded programs to be reproduced from the storage device and displayed using the free television-broadcast channel. Furthermore, each time the apparatus is turned on, the reproducing of the recorded programs starts with a different program. If the power-on operation is performed at the same time each day, for example, each power-on operation scarcely starts the reproducing with the same recorded program. Hence, the user may always enjoy the recorded programs of new contents. What is more, each power-on operation of the apparatus starts the reproducing from a paused position of a recorded program, the reproducing of which was ended by the previous power-off operation. In a case where the viewing of a favorite recorded program is suspended, therefore, the user is also able to continue to watch the favorite program by reproducing the program from the paused position.

In the simple and low-cost constitution wherein the free television-broadcast channel is utilized for endlessly reproducing the recorded programs from the storage device in operative association with the power-on and power-off operations of the apparatus, the recorded programs in the storage device may be displayed on the monitor screen as if the recorded programs were broadcast programs on the receiver channel. Thus, the effective use of the recorded programs may be accomplished by decreasing the dead storage of the recorded programs.

Furthermore, the recording/reproducing apparatus is characterized in that the free channels are more than one and the recorded programs in the storage device are allocated to the individual free channels so as to be endlessly reproduced on a per-free-channel basis.

In a case where the free channels are more than one and the recorded programs in the storage device are allocated to the individual free channels so as to be endlessly reproduced on a per-free-channel basis, as taught by the second aspect of the invention, the same effect as that of the first aspect of the invention may be attained by reproducing for viewing the different programs on a per-free-channel basis. This approach is particularly effective in cases where the storage device stores a large number of recorded programs, and where the recorded programs are classified into specific categories and the recorded programs in each category are endlessly reproduced on each of the free channels for viewing.

According to the invention for achieving the second object, a recording/reproducing apparatus having functions to receive television broadcasts and to record or reproduce the received television programs and the like, and operating to record and store the received television programs and the like in a storage device and to provide monitor outputs of the received television programs on a receiver channel as giving priority to at least reproducing monitor outputs, the apparatus comprises: a program reproducing schedule generator which referring to recorded-program reproducing conditions, generates a program reproducing schedule used for reproducing the recorded programs from the storage device at broadcast times of designated television programs, and which overwritably stores the program reproducing schedule; a recorded-program reproducing controller which reproduces a recorded program of interest from the storage device according to the program reproducing schedule when a broadcast time of the designated program corresponding to the recorded program of interest comes in a state where a broadcasting channel of the designated program is selected as the receiver channel; and a monitor output controller which provides monitor outputs of the recorded program reproduced from the storage device instead of outputting signals received on the broadcasting channel at the broadcast time of the designated program.

According to the third aspect of the invention, when the broadcast time of the designated program comes in the state where the broadcasting channel of the designated program is selected as the receiver channel, the recorded-program reproducing controller and the monitor output controller do not display the broadcast program on the broadcasting channel, but display the recorded program reproduced from the storage device according to the program reproducing schedule (video program schedule) generated by and overwritably stored in the program reproducing schedule generator.

In this case, the user may designate a television program the viewing of which is not desired, so that the recorded programs may be automatically reproduced from the storage device and displayed in place of the unwanted television program.

Since the recorded programs in the storage device may be displayed as the television programs on the broadcasting channel, the recorded programs may be reproduced from the storage device for viewing in the case where the change of receiver channels is made as skipping the free channels, as well. Thus is solved the problem associated with the utilization of the free television-broadcast channels, so that the effective use of the recorded programs may be accomplished by decreasing the dead storage of the recorded programs.

Furthermore, the recording/reproducing apparatus is characterized in that the broadcasting channels are more than one and the recorded programs in the storage device are allocated to the individual broadcasting channels based on the recorded-program reproducing conditions.

In a case where the broadcasting channels are more than one and the recorded programs in the storage device are allocated to the individual broadcasting channels, as taught by the fourth aspect of the invention, the same effect as that of the third aspect of the invention may be attained by reproducing for viewing the different recorded programs on a per-broadcasting-channel basis, the recorded program reproduced based on the program reproducing schedule and at the broadcast time of the designated program on each of the broadcasting channels. This approach is particularly effective in cases where the storage device stores a large number of recorded programs, and where the recorded programs are classified into specific categories and the recorded programs in each category are reproduced for viewing.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

### BRIEF DESCRIPTION OF THE DRAWINGS

FIG.1 is a block diagram showing an apparatus according to one embodiment of the invention;
FIG.2 is a flow chart explaining one part of the operation of the apparatus of FIG.1;
FIG.3 is a flow chart explaining the other part of the operation of the apparatus of FIG.1;
FIG.4 is a block diagram showing an apparatus according to another embodiment of the invention;
FIG.5 is a flow chart showing the steps of a program reproducing schedule generating process performed by the apparatus of FIG.4;
FIG.6 is a chart illustrating one example of recorded programs stored in HDD 15 of FIG.4;
FIG.7 is a chart illustrating an exemplary program reproducing schedule of FIG.5;
FIG.8 is a chart illustrating another exemplary program reproducing schedule of FIG.5;
FIG.9 is a chart illustrating still another exemplary program reproducing schedule of FIG.5;
FIG.10 is a flow chart explaining one part of the operation of the apparatus of FIG.4 for reproducing and displaying the recorded programs; and
FIG.11 is a flow chart explaining the other part of the operation of the apparatus of FIG.4 for reproducing and displaying the recorded programs.

### Description of Reference Characters

### DETAILED DESCRIPTION OF THE PREFERRED EMBODIMENTS

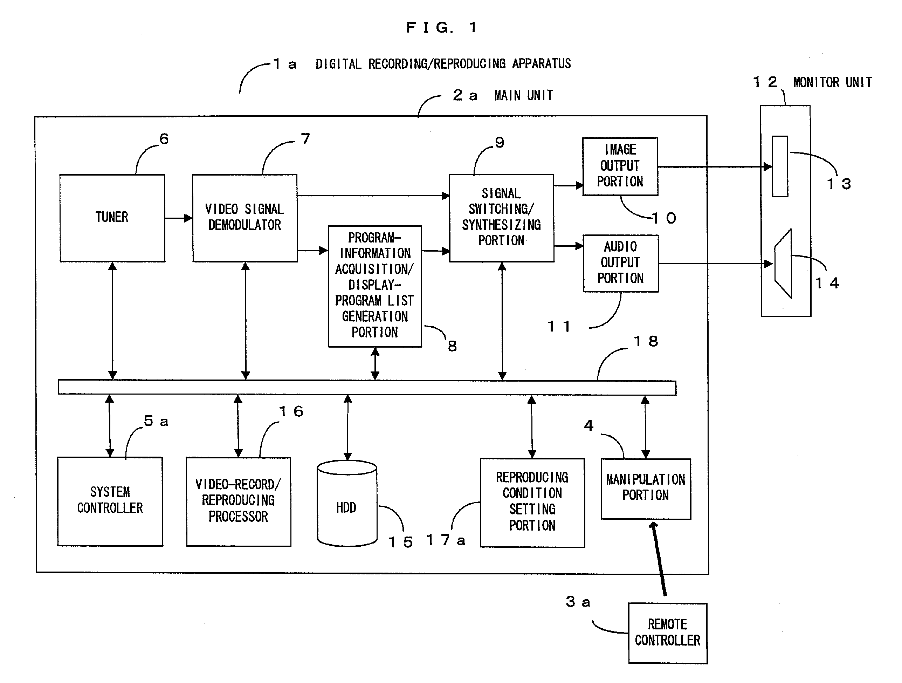

For a more detailed explanation of the invention, exemplary embodiments thereof will be specifically described with reference to FIG.1 to FIG.11.

### First Embodiment

Now referring to FIG. 1 to FIG. 3, description is made on a first embodiment having a constitution for achieving the above first object, the constitution wherein the reproducing and display of the recorded programs in the storage device are performed using the free television-broadcast channels.

### <Constitution>

FIG.1 is a block diagram showing a digital recording/reproducing apparatus 1a to which the invention is applied. This digital recording/reproducing apparatus 1a is a digital-type video recorder having the aforesaid standalone constitution.

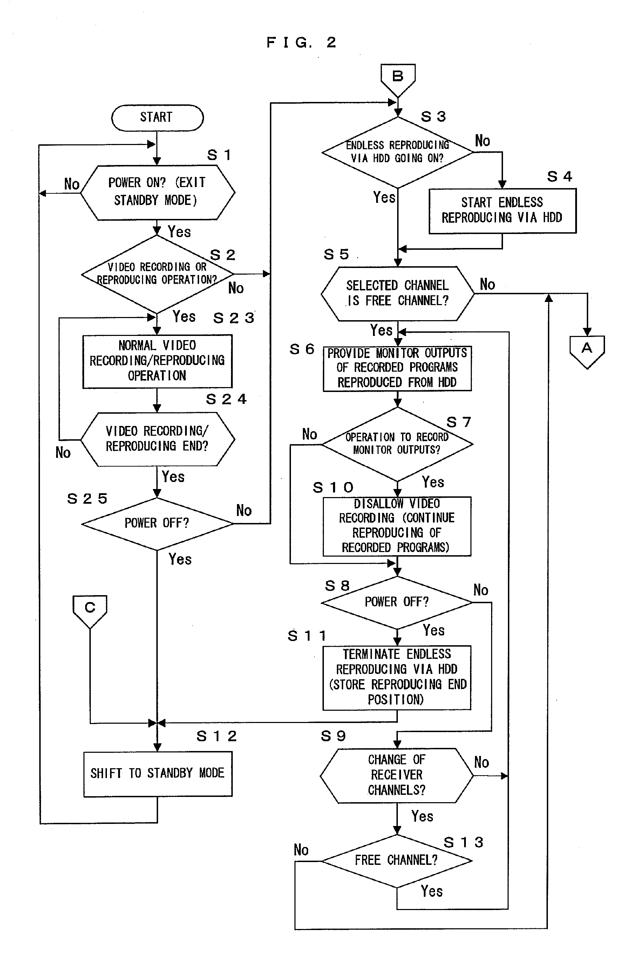

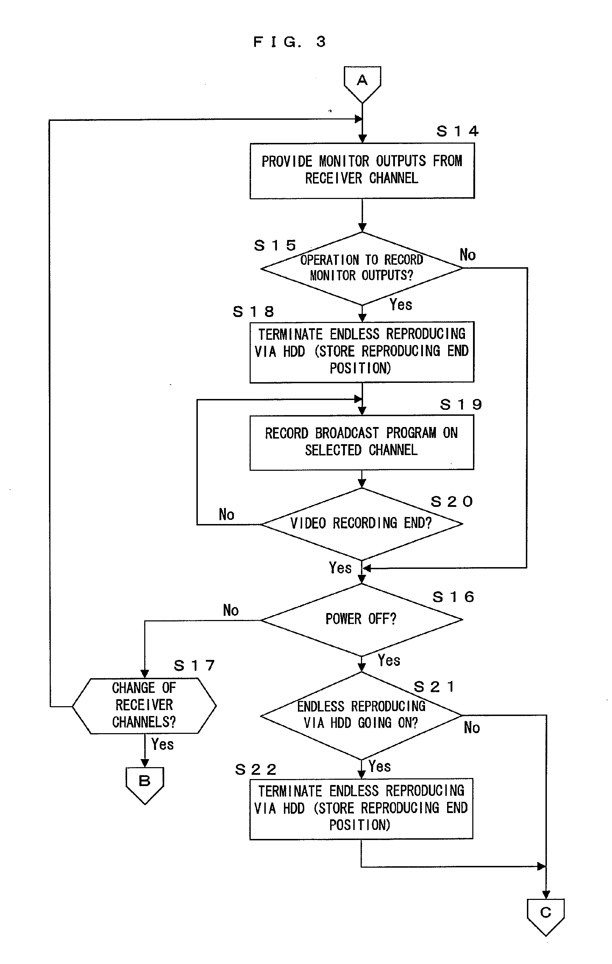

FIG.2 and FIG. 3 are flow charts explaining one part and the other part of the operation (processing) of the digital recording/reproducing apparatus 1a, respectively.

As shown in FIG.1, the digital recording/reproducing apparatus 1a includes a main unit 2a and a remote controller 3a manually operated by a user. The main unit 2a is controlled by a system controller 5a constituted by a microcomputer, which is operated by sequentially selecting numeral keys or power channels of the remote controller 3a or a manipulation portion 4 of the main unit 2a and by manipulating command keys. The main unit has functions to receive television broadcasts, to record television programs broadcast on channels, to reproduce the recorded programs and such.

In the digital recording/reproducing apparatus 1a, indicated at 6 is a tuner, which is connected to an unillustrated antenna, a cable broadcasting cable and the like. The tuner 6 selectively receives a television program on an analog or digital television receiver channel selected by manipulating the remote controller 3a or the manipulation portion 4 of the apparatus. Indicated at 7 is a video signal demodulator which is the next stage to the tuner 6 and demodulates a video signal output from the tuner 6 according to the type of the tuned channel and the like. The demodulator also digitizes the video signal, as needed, so as to reproduce an image output and an audio output from the digital signal of the television program on the tuned channel.

Indicated at 8 is a program-information acquisition/display-program list generation portion which is the next stage to the video signal demodulator 7. As needed, the list generation portion 8 extracts electronic program guide (EPG) information from the image output from the video signal demodulator 7 under the control of the system controller 5a. According to the embodiment, the list generation portion 8 generates an electronic program guide as the display-program list and generates an image output in which the electronic program guide is superimposed on the images of the displayed program.

Indicated at 9 is an image-audio signal switching/synthesizing portion. Under the control of the system controller 5a, the signal switching/synthesizing portion 9 switches between the image output of the television broadcast as outputted from the program-information acquisition/display-program list generation portion 8 plus the audio output of the television broadcast as outputted from the video signal demodulator 7, and an image output and an audio output of the recorded program so reproduced, which will be described hereinlater. Furthermore, the synthesizing portion synthesizes the above outputs and provides a resultant output.

Indicated at 10 and 11 are an image output portion and an audio output portion which are the next stages to the switching/synthesizing portion 9. These portions perform analog conversions according to the image output and audio output from the signal switching/synthesizing portion 9, thereby generating an image monitor output and an audio monitor output in a digital or analog form, respectively. These image and audio monitor outputs are supplied to a monitor unit 12, such as a liquid crystal television monitor, connected with the recording/reproducing apparatus 1a, so as to be displayed on a display panel 13 of the monitor unit 12 and outputted from a speaker 14. It is noted that the signal switching/synthesizing portion 9, the image output portion 10 and the audio output portion 11 constitute a monitor output controller.

Indicated at 15 is an HDD having a large memory and constituting a storage device. The HDD records television programs and programs inputted from external apparatuses on a per-title basis and stores the programs thus recorded. Indicated at 16 is a video-record/reproducing processor for controlling the HDD 15 in video recording or reproducing. The processor performs normal recording to or normal reproducing via the HDD 15 and endless reproducing to be described hereinlater, as controlled by the system controller 5a operated by manipulating the remote controller 3a or the manipulation portion 4. The processor and the system controller 5a constitute a recorded-program reproducing controller.

Indicated at 17a is a reproducing condition setting portion for setting reproducing conditions of the recorded program. The condition setting portion includes a non-volatile overwritable memory, such as a flash memory. The condition setting portion overwritably holds free channel numbers previously defined via the remote controller 3a or the manipulation portion 4, for example. Furthermore, the setting portion overwritably stores a reproducing end position (address) of the aforesaid endless reproducing via the HDD 15 when the digital recording/reproducing apparatus 1a is turned off. The setting portion has a function to set a reproducing start position of the endless reproducing to the previous reproducing end position stored therein when the digital recording/reproducing apparatus 1a is subsequently turned on, a function to store the settings of the order of endless reproducing of the recorded programs from the HDD 15, such as the order of video recording of programs, the ascending or descending order of titles of the recorded programs and the like. Indicated at 18 is a control/data bus of the digital recording/reproducing apparatus 1a.

In addition to a variety of control programs which are installed in the conventional apparatus for controlling the reception of television broadcasts, the normal video recording and reproducing operations and the like, the system controller 5a is provided with a control program for controlling the endless reproducing of the recorded programs, as shown in Fig.2 and FIG.3. When the digital recording/reproducing apparatus 1a is turned on, the system controller executes these control programs.

### <Operations>

When a power plug of the digital recording/reproducing apparatus 1a is connected with an outlet, the apparatus is placed in a power-on standby mode such as to monitor a power-on operation, to perform a standby operation for timer recording or the like.

When the apparatus is turned on by depressing a power button, for example, the apparatus is preferentially shifted to a television mode. In the television mode, image and audio monitor outputs of television broadcast on a channel selected by a channel selection (channel changing) operation via the remote controller 3a or the manipulation portion 4 are sent from the signal switching/synthesizing portion 9 to the display panel 13 and the speaker 14 of the monitor unit 12 via the output portions 10, 11, whereby the television program received on the receiver channel is displayed.

Next, when the remote controller 3a or the manipulation portion 4 is manipulated to select a video recording operation for recording a broadcast program on the receiver channel or a video program inputted from the external apparatus, the digital recording/reproducing apparatus 1a is shifted to a video record mode. Hence, the broadcast program on the receiver channel supplied from the video signal demodulator 7 or the video program supplied from an unillustrated external input terminal is recorded in the HDD 15 on a per-title basis by way of the video-record/reproducing processor 16.

In the embodiment, the signal switching/synthesizing portion 9 switches the image and audio monitor outputs of the digital recording/reproducing apparatus 1a from those of the broadcast program on the receiver channel to image and audio monitor outputs of the program recorded in the HDD 15. At this time, if the broadcast program on the receiver channel is recorded, the on-screen display and the like of the monitor unit 12 do not change despite the switching of the monitor outputs.

In the case of timer recording based on the electronic program guide, when a timer of the apparatus in the aforesaid standby mode reaches a set time, the apparatus is automatically turned on and placed in the video record mode so that a broadcast program on a selected receiver channel, so programmed, is recorded in the HDD 15 via the video-record/reproducing processor 16 on the per-title basis. In this case, as well, the image and audio monitor outputs of the digital recording/reproducing apparatus 1a are the image and audio monitor outputs of the program recorded in the HDD 15.

As the recording operations and timer recording operations are repeated, the HDD 15 stores therein an increasing number of recorded programs.

On the other hand, when the remote controller 3a or the manipulation portion 4 is manipulated to select a reproducing operation for reproducing any one of the recorded programs in the HDD 15 by designating a title thereof, the digital recording/reproducing apparatus 1a is shifted to the reproducing mode wherein the video-record/reproducing processor 16 reproduces the selected recorded program from the HDD 15. Hence, the image and audio monitor outputs of the digital recording/reproducing apparatus 1a are preferentially changed to the image and audio monitor outputs of the program so reproduced.

Next, the endless reproducing of the recorded programs from the HDD 15 is described with reference to FIG.2 and FIG.3.

As shown in FIG. 2, the apparatus in the standby mode monitors the power-on operation in Step S1. If the apparatus exits the standby mode in response to the power-on operation, an operation flow proceeds from Step S1 to Step S2 to determine on that the apparatus is in neither the video record mode nor the reproducing mode. If the apparatus is in the television mode instead of the video record mode or the reproducing mode, the operation flow proceeds to Step S3, as skipping Step S2 (NO) .

In this case, if the recorded programs in the HDD 15 are not subjected to the endless reproducing, the operation flow proceeds to Step S4, where the video-record/reproducing processor 16 starts the endless reproducing of the recorded programs from the HDD 15.

Then, the recorded programs are sequentially reproduced from the HDD 15 in a specified reproducing order, the reproducing starting from a program corresponding to the previous endless-reproducing end position stored in the reproducing condition setting portion 17a. In this state, the operation flow proceeds from Step S3 or Step S4 to Step S5, where determination is made as to whether a selected receiver channel is a free channel set in the reproducing condition setting portion 17a or not.

The free channel of the reproducing condition setting portion 17a is a channel of a channel number, for which a channel selection condition is not specified by a so-called pre-set. That is, the free channel is free of receivable television programs. In a case where there are a plural number of such unspecified channels, one or more than one (including the all) of these channels may be selected by the user and set as the free channel (s) of the reproducing condition setting portion 17a.

If the free channel is selected in the television mode, the operation flow proceeds from Step S5 to Step S6, where the signal switching/synthesizing portion 9 switches the image and audio monitor outputs of the digital recording/reproducing apparatus 1a from reception signal output from the free channel to the image and audio monitor outputs of the recorded programs endlessly reproduced from the HDD 15. Thus, the recorded programs endlessly reproduced from the HDD 15 are displayed on the monitor unit 12 as if the recorded programs were televised.

While the image and audio monitor outputs of the recorded programs endlessly reproduced from the HDD 15 are provided, a loop operation looping back to Step S6 via Steps S7, S8 and S9 is performed to monitor for manipulation to record the monitor outputs, power-off operation, change of receiver channels and the like.

When the manipulation is made to record the monitor outputs of the recorded program being reproduced, the operation flow proceeds from Step S7 to Step S10, where the manipulation is disallowed to inhibit double recording. Subsequently, the operation flow loops back to Step S6 via Steps S8 and S9, continuing to provide the image and audio monitor outputs of the recorded programs endlessly reproduced from the HDD 15.

On the other hand, if the power-off operation is performed while the image and audio monitor outputs of the recorded programs endlessly reproduced from the HDD 15 are provided, the operation flow proceeds from Step S8 to Step S11, where the endless reproducing via the HDD 15 is terminated and to a reproducing end position (address and such) is written to the reproducing condition setting portion 17a. Subsequently, the operation flow proceeds to Step S12, where the apparatus is shifted to the standby mode to repeat the operations starting from Step S1.

If a channel selection operation is performed to change the receiver channels while the image and audio monitor outputs of the recorded programs endlessly reproduced from the HDD 15 are provided, the operation flow proceeds from Step S9 to Step S13.

If the receiver channel selected by the channel changing operation is the free channel of the reproducing condition setting portion 17a, the operation flow returns from Step S13 to Step S6 to continue to provide the image and audio monitor outputs of the recorded programs endlessly reproduced from the HDD 15.

If the receiver channel selected by the channel changing operation is not the free channel of the reproducing condition setting portion 17a, the selected receiver channel is normally a broadcasting channel and hence, the operation flow proceeds from Step S13 to Step S14 of FIG.3, where the signal switching/synthesizing portion 9 switches the image and audio monitor outputs of the digital recording/reproducing apparatus 1a back to the reception signal output via the receiver channel. Accordingly, the apparatus displays a broadcast program on the receiver channel while continuing the endless reproducing via the HDD 15.

During the display of the broadcast program on the receiver channel, a loop operation looping back to Step S14 via Steps S15, S16 and S17 is performed to monitor for the video recording operation, the power-off operation, the change of receiver channels and the like, as shown in FIG.3.

When the apparatus is manipulated to record the broadcast program received on the receiver channel and displayed, the operation flow proceeds from Step S15 to Step S18, where similarly to Step S11 of FIG.2, the endless reproducing via the HDD 15 is terminated and the reproducing end position (address and the like) is stored in the reproducing condition setting portion 17a. Subsequently, the operation flow proceeds to Step S19 to shift the apparatus to the video record mode, wherein a loop operation including Steps S19 and S20 is performed to record the broadcast program of interest in the HDD 15.

When the recording operation is completed, the operation flow proceeds from Step S20 to Step S16 to check for the power-off operation.

If the power-off operation is not detected in Step S16 so that the apparatus is maintained in the power-on state, the operation flow proceeds from Step S16 to Step S17, from which a loop operation is repeated.

If the power-off operation is detected in Step S16, the operation flow proceeds from Step S16 to Step S21 to determine whether the endless reproducing of the recorded programs from the HDD 15 is going on or not. If the endless reproducing via the HDD 15 is terminated to perform the recording of the monitor outputs, the operation flow returns to Step S12 of FIG.2, where the apparatus is returned to the standby mode to repeat the operations starting from Step S1. On the other hand, if the recording of the monitor outputs is not performed and the endless reproducing via the HDD 15 is going on, the operation flow proceeds from Step S21 to Step S22, where the endless reproducing via the HDD 15 is terminated and the reproducing end position (address and the like) is stored in the reproducing condition setting portion 17a. Subsequently, the operation flow proceeds to Step S12 of FIG.2, where the apparatus is returned to the standby mode to repeat the operations starting from Step S1.

If the change of receiver channels is detected in Step S17, the operation flow proceeds from Step S17 to Step S3 of FIG.2. In a state where Steps S3 and S4 are done to resume the endless reproducing via the HDD 15 from the previous reproducing end position, the apparatus repeats the operations starting from Step S5.

If the operation of video recording, reproducing or timer recording is detected in Step S2 of FIG.2, the operation flow proceeds from Step S2 to Step S23 to shift the apparatus to the video record mode or the reproducing mode. A loop operation including Steps S23 and S24 is performed so that the apparatus records a broadcast program on the receiver channel or an externally inputted program in the HDD 15 or otherwise, executes the normal reproducing of a recorded program selected from the HDD 15. At this time, the signal switching/synthesizing portion 9 switches the image and audio monitor outputs of the digital recording/reproducing apparatus 1a to either the image and audio monitor outputs of the program being recorded in the HDD 15 or the image and audio monitor outputs of the recorded program reproduced from the HDD 15. When the video recording or the program reproducing is completed, the operation flow proceeds from Step S24 to Step S25. If the power-off operation is performed, the operation flow proceeds from Step S25 to Step S12 to shift the apparatus to the standby mode. If the power-off operation is not performed, the operation flow proceeds from Step S25 to Step S3.

### <Summary>

In this embodiment having the constitution wherein the reproducing and display of the recorded programs in the HDD 15 are performed using the free television-broadcast channels, the power-on operation causes the recorded-program reproducing controller constituted by the system controller 5a and the video-record/reproducing processor 16 to operate as follows until the power-off operation is performed. That is, the recorded-program reproducing controller executes the endless reproducing of the recorded programs from the HDD 15, as giving priority to the control of the normal video recording or reproducing based on the manipulation of the apparatus, the timer settings or the like. If the free channel set in the reproducing condition setting portion 17a is selected as the receiver channel during the endless reproducing, the monitor output controller including the signal switching/synthesizing portion 9 does not output reception signal on this free channel but provides the monitor outputs of the recorded program undergoing the reproducing to the monitor unit 12, so that the recorded program is displayed on the monitor screen.

At the power-off operation, a reproducing start position controller of the system controller 5a overwritably stores the reproducing end position of the endless reproducing via the HDD 15 when the apparatus is turned off. At the subsequent power-on operation, the above endless reproducing is started from the previous reproducing end position.

During the endless reproducing continuing for a time period between the power-on of the digital recording/reproducing apparatus 1a and the power-off thereof, the recorded programs are sequentially reproduced from the HDD 15 in repetitious fashion. If the free channel set in the reproducing condition setting portion 17a is selected as the receiver channel during the endless reproducing, the monitor output is switched to the recorded program currently reproduced so that this recorded program is displayed on the monitor screen as if the program were broadcast on the free channel.

According to the low-cost and simple constitution negating the need for the complicated operations including the generation of the program schedule and the management of program reproducing times according to the schedule, the free television-broadcast channels may be utilized for displaying the recorded programs played from the HDD 15 as if these programs were broadcast on such channels.

At each power-on operation of the digital recording/reproducing apparatus 1a, the reproducing is started with a different recorded program. If the power-on operation is performed at the same time each day, for example, each power-on operation scarcely starts the reproducing with the same recorded program. Hence, the user may always enjoy the recorded programs of new contents.

At each power-on operation of the digital recording/reproducing apparatus 1a, the endless reproducing is started from the paused position of a program in the HDD 15, the reproducing of which program was ended by the previous power-off operation. This is advantageous in a case, for example, where need arises for taking care of some other task while the user is enjoying a favorite recorded program on the free television receiver channel. Then, the user turns off the digital recording/reproducing apparatus 1a to stop enjoying the program. Subsequently when the user turns on the digital recording/reproducing apparatus 1a again, the endless reproducing via the HDD 15 is started from the paused position of the recorded program of interest so that the user never misses the rest part of the favorite recorded program.

Hence, the following advantage may be offered by the simple and low-cost constitution which utilizes the free television-broadcast channels for providing the endless reproducing of the recorded programs from the HDD in operative association with the power-on and power-off operations of the digital recording/reproducing apparatus 1a. The constitution is adapted to display the recorded programs in the HDD 15 as if they were the broadcast on the receiver channels, so that the effective use of the recorded programs may be accomplished by minimizing the dead storage of the recorded programs in the HDD. With the increase of viewing chances, chances to delete unwanted recorded programs from the HDD 15 are also increased. This leads to a merit of ensuring a free space in the HDD 15.

In a case where there are a plural number of free channels, the all or some of the free channels may be of course defined as the channels used for the aforesaid endless reproducing. In this case, all the free channels may be indiscriminatingly used or used with time shift functionality for endlessly reproducing all the recorded programs from the HDD 15. Alternatively, for example, the recorded programs in the HDD 15 may be properly distributed to the individual free channels so as to execute the endless reproducing on each of the free channels. Thus, programs varying from one free channel to another may be reproduced for viewing so that the aforesaid effect may be achieved. This approach is particularly effective in cases where the HDD 15 stores a large number of recorded programs, and where the recorded programs are classified into specific categories and the recorded programs in each category are reproduced on each of the free channels for viewing.

### Another Embodiment

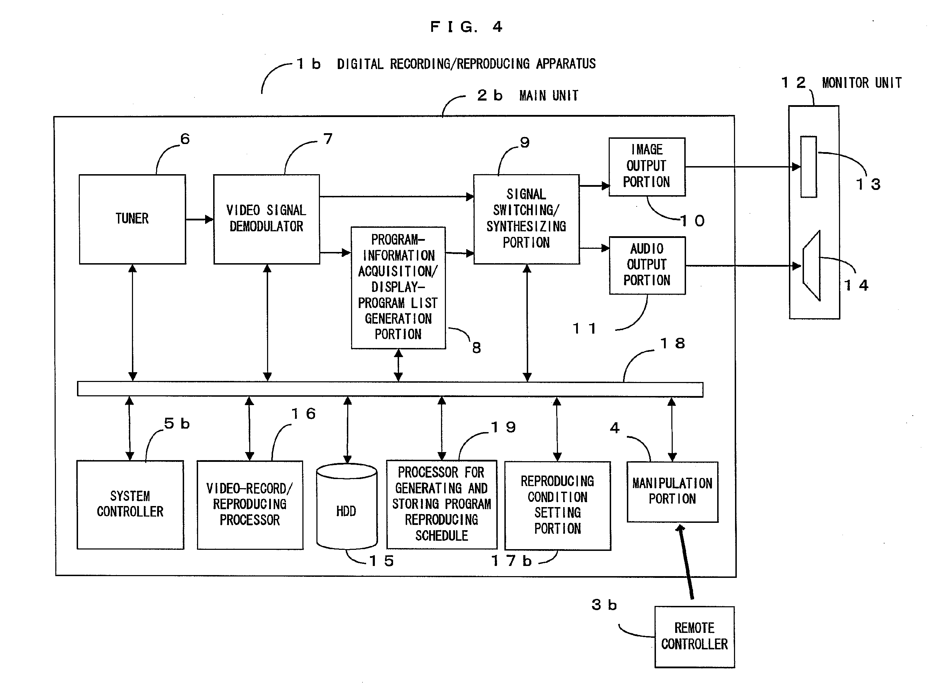

Now referring to FIG.4 to FIG.11, description is made on another embodiment adapted to enable the reproducing and display of the recorded programs in the storage device in the case where the change of the receiver channel is made as skipping the free channels, as well. Thus, the embodiment achieves the aforesaid second object hereof.

### <Constitution>

FIG.4 is a block diagram showing a digital recording/reproducing apparatus 1b to which the invention is applied. In the figure, the same reference characters as those of FIG.1 designate the same or equivalent parts. This digital recording/reproducing apparatus 1b is also a digital-type video recorder having the aforesaid standalone constitution employing the HDD 15 as the storage device.

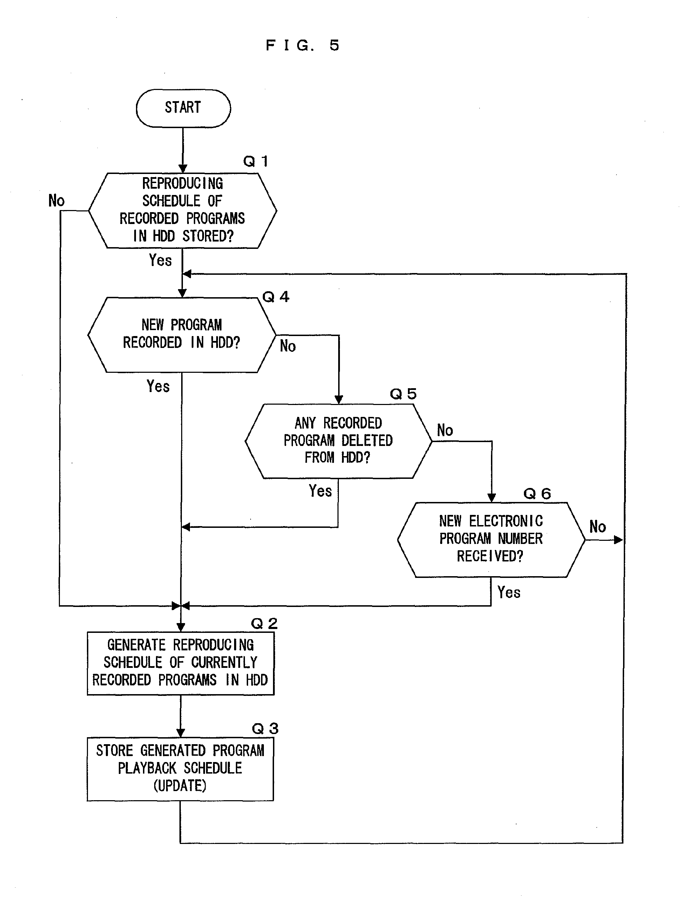

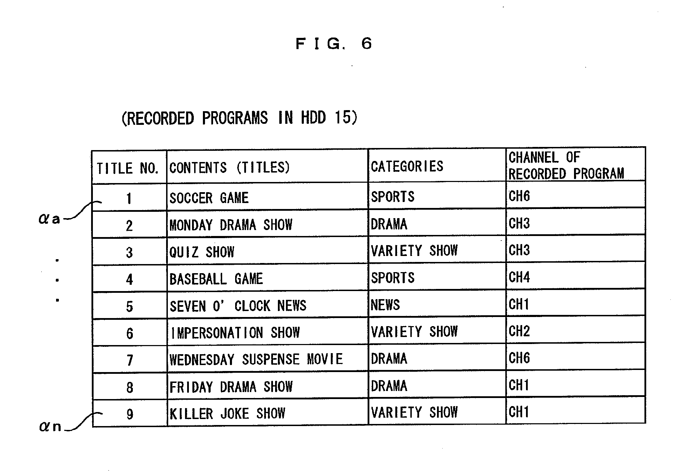

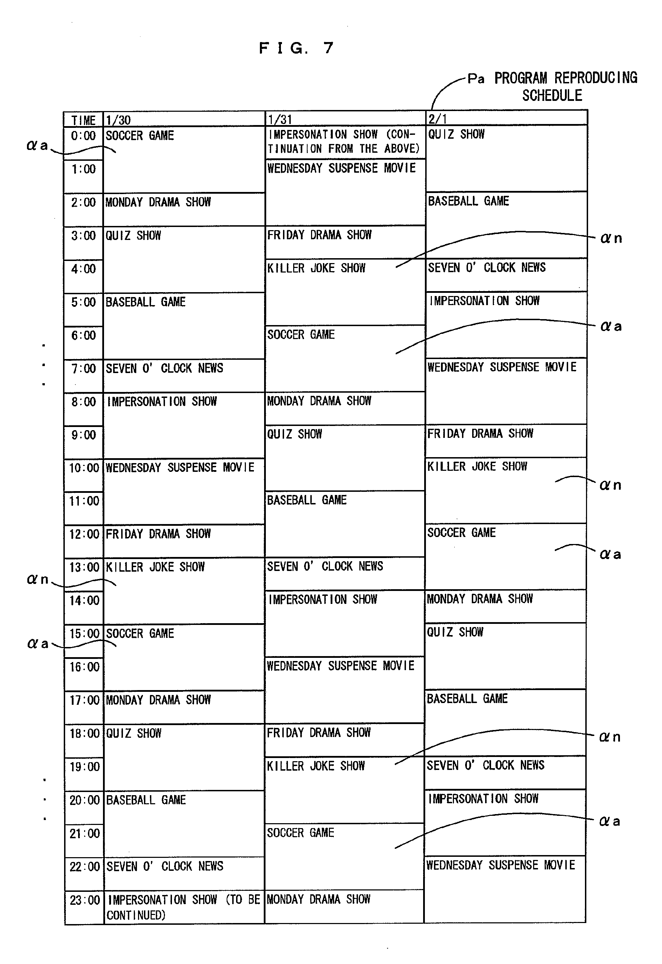

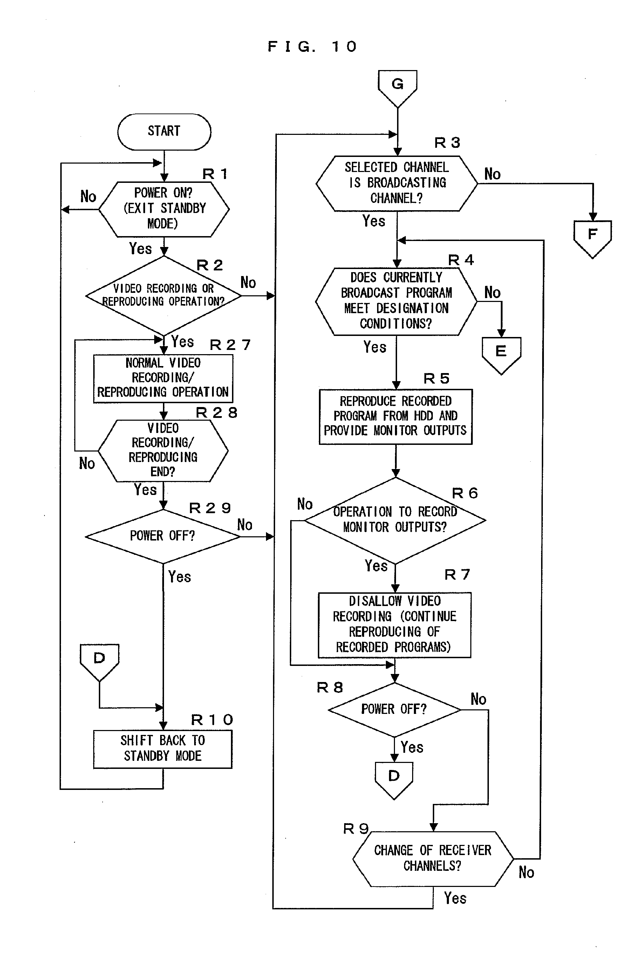

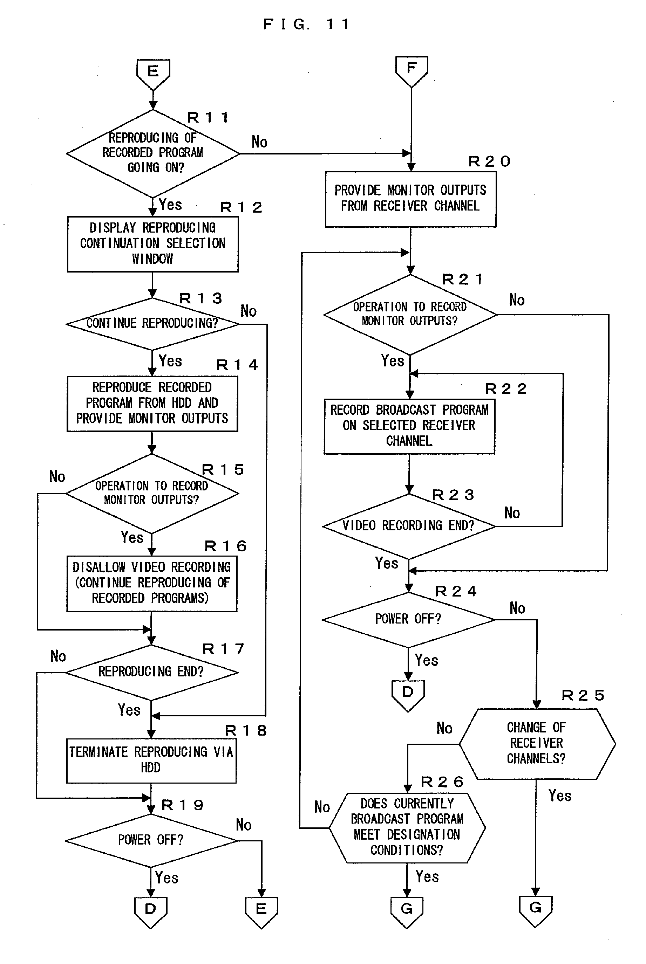

FIG.5 is a flow chart showing the steps of a program reproducing schedule generating process performed by the digital recording/reproducing apparatus 1b, and FIG.6 is a chart illustrating one example of the recorded programs in the HDD 15. FIG.7 to FIG.9 are charts each illustrating an exemplary program reproducing schedule. FIG.10 and FIG.11 are flow charts each explaining one part or the other part of the operation of the digital recording/reproducing apparatus 1b for reproducing the recorded programs for viewing.

As shown in FIG.4, the digital recording/reproducing apparatus 1b includes a main unit 2b and a remote controller 3b. According to the program reproducing schedule (video program schedule) generated based on conditions specified by the user, the apparatus reproduces each of the recorded programs from the HDD 15 at a broadcast time of a designated television program on a designated broadcasting channel, thereby displaying the recorded program on the monitor unit 12 instead of the designated television program.

Therefore, the main unit 2b is provided with a reproducing condition setting portion 17b in place of the reproducing condition setting portion 17a of FIG.1. This reproducing condition setting portion 17b includes a non-volatile overwritable memory, such as a flash memory, for overwritably holding reproducing conditions of the recorded programs. The reproducing conditions include, for example, the order of reproducing the recorded programs from the HDD 15 as specified by manipulating the remote controller 3a or the manipulation portion 4, the designated television programs to be replaced by the recorded programs so reproduced, and the like. The remote controller 3b has a constitution wherein various keys necessary for setting the reproducing conditions of the recorded programs, generating the program reproducing schedule and such are added to the remote controller 3a of FIG.1.

The main unit 2b includes, as a program reproducing schedule generator, a processor for generating and storing program reproducing schedule 19 which generates the program reproducing schedule and stores the same. Based on the recorded-program reproducing conditions retained by the reproducing condition setting portion 17b, information on the titles of the recorded programs in the HDD 15 and the like, the processor for generating and storing program reproducing schedule 19 generates the program reproducing schedule based on which the recorded programs are reproduced from the HDD 15 at the broadcast times of the designated television programs. The processor overwritably stores the program reproducing schedule in the non-volatile memory such as a flash memory.

The program reproducing schedule is updated whenever the storage contents of the HDD 15 are changed due to the addition of a newly recorded program or the deletion of any recorded program or whenever the broadcast time of designated television program is varied.

The program reproducing schedule contains a list of the titles (or symbols or the like representing the programs) of the recorded programs to be reproduced at the broadcast times of the designated television program on the designated broadcasting channels. According to this embodiment, the program reproducing schedule is generated by the following synthesizing process by the program-information acquisition/display-program list generation portion 8, for example, in order to provide the viewing of the schedule as easy to read as the received electronic program guide. In the program reproducing schedule, the recorded programs to be reproduced are overwritten in time slots of the designated television programs on the designated broadcasting channels, and the titles of the time slots are replaced by the titles of the recorded programs. In this case, the recorded programs to be reproduced at the above broadcast times are selected from the HDD 15 according to the reproducing order set in the reproducing condition setting portion 17b. However, the order of reproducing the recorded programs does not matter. Furthermore, a payback period of the recorded program so selected may be shorter or longer than a broadcast period of the corresponding television program. Specifically, the recorded programs to be reproduced may be selected from the HDD 15 in the recording order or in the ascending or descending order of the program titles such that a reproducing period of the selected programs exceeds the broadcast period of the corresponding television program (or the total length of broadcast periods of plural television programs sequentially broadcast), for example. Alternatively, one or more than one recorded programs in the HDD 15 may be selected from those having smaller reproducing numbers such that the selected recorded program(s) may account for the closest possible reproducing period to the broadcast period of the corresponding television program. If the reproducing of the recorded program(s) is still going on when it is an ending time of the television program, the user is allowed to decide either to continue the reproducing of the recorded program(s) or to switch back the apparatus to display a television program.

Next, the main unit 2b includes a system controller 5b replacing the system controller 5a of FIG.1. This system controller 5b and the video-record/reproducing processor 16 constitute the recorded-program reproducing controller. In addition to a variety of control programs which are installed in the conventional apparatus for controlling the reception of television broadcasts, the normal video recording and reproducing operations and the like, a control program for the generation of the program reproducing schedule as shown in FIG.5 and a control program for the reproducing of the recorded programs as shown in Fig.10 and FIG.11 are installed in the system controller 5b. When the digital recording/reproducing apparatus 1b is turned on, the system controller executes these control programs on an as-needed basis.

### <Operations>

First, the generation of the program reproducing schedule for the digital recording/reproducing apparatus 1b is described with reference to FIG.5.

In the digital recording/reproducing apparatus 1b, the order of reproducing the recorded programs from the HDD 15, the designated television programs (broadcast programs) replaced by the recorded programs and the like are overwritably written to the reproducing condition setting portion 17b when the apparatus is initialized or the user makes choices. It is noted that the television programs replaced by the recorded programs are programs which are received on the broadcasting channels normally selected by the user and the viewing of which is not desired by the user. Such programs may be designated by inputting the specific titles or the categories of the programs, for example, such that such programs may be selected from the electronic program guide. In this case, the designated programs replaced by the recorded programs include programs received on a particular channel (broadcasting channel) and having specific titles or programs received on plural broadcasting channels and having titles including a key word representing a designated category.

When the digital recording/reproducing apparatus 1b is plugged in, the system controller 5b automatically controls the generation of the program reproducing schedule, as shown in FIG.5.

In a case where the reproducing schedule of the recorded programs in the HDD 15 is not stored in the processor for generating and storing program reproducing schedule 19 immediately after the initialization or the like, an operation flow proceeds from Step Q1 to Step Q2 of FIG.5. In Steps Q2 and Q3, the processor for generating and storing program reproducing schedule 19 extracts the designated television programs from the latest electronic program guide and based on the recorded-program reproducing conditions retained by the reproducing condition setting portion 17b, thereby to acquire the channel numbers of the television programs (broadcasting channel numbers) and the broadcast times thereof. The processor generates the program reproducing schedule wherein, for example, the titles of the designated programs in the electronic program guide are replaced by the titles of the recorded programs to be reproduced. The resultant schedule is stored in the processor.

Unless the power plug of the apparatus is disconnected from the outlet afterwards, the operation flow proceeds to Step Q4. A loop operation including Steps Q4, Q5 and Q6 is performed to monitor for the video recording of a new program in the HDD 15, the deletion of any recorded program from the HDD 15, the reception of a new electronic program guide or the like. Each time the recorded-program reproducing conditions are varied due to the video recording of the new program in the HDD 15, the deletion of any recorded program in the HDD 15 or the reception of the new electronic program guide, thus requiring the program reproducing schedule to be updated, Steps Q2 and Q3 are performed to update the program reproducing schedule according to the varied recorded-program reproducing conditions.

Next, specific examples of the program reproducing schedule are described with reference to FIG.6 to FIG.9.

As shown in FIG. 6, the HDD 15 stores therein a large number of recorded programs αa, ..., αn which are accompanied by addresses indicating record positions, numbers indicating the places of recording order, titles, categories, channels the recorded programs and the like.

For simplicity purpose, it is assumed as follows, for example. In a case where one particular broadcasting channel is designated and all the television programs on the designated channel are designated as programs not to be viewed, a program reproducing schedule as shown in FIG.7 is generated. In the figure, Pa denotes the program reproducing schedule wherein the recorded programs αa, ..., αn are sequentially allocated to the respective time slots of the schedule Pa in repetitious fashion.

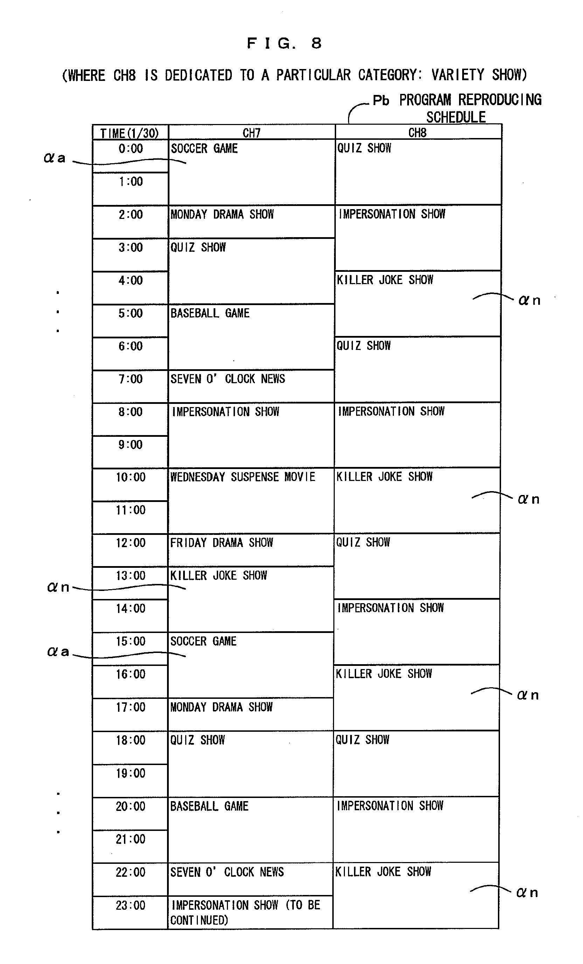

In a case where plural broadcasting channels, such as the seventh channel CH7 and the eighth channel CH8, are designated, the recorded programs may be indiscriminatingly allocated to these channels CH7 and CH8. However, it is also possible to allocate the recorded programs of a favorite category (such as a variety show) exclusively to the eighth channel CH8. In this case, a program reproducing schedule Pb as shown in FIG.8, for example, may be generated. It is also possible to allocate the recorded programs of each category to each different channel.

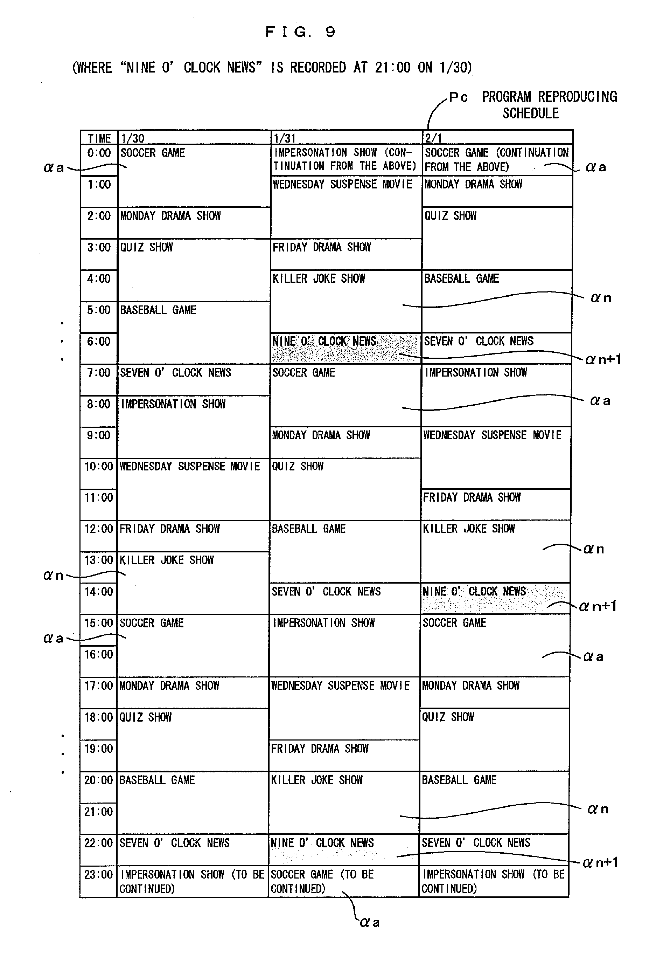

If a new program, Nine O'clock News broadcast on January 30 (1/30) is recorded in the HDD 15 in a state where the processor for generating and storing program reproducing schedule 19 retains the program reproducing schedule Pa shown in FIG.7, the program reproducing schedule is updated to a program reproducing schedule Pc shown in FIG.9, for example.

Next, the reproducing of the recorded programs from the HDD 15 is described with reference to FIG.10 and FIG.11.

As shown in FIG.10, the digital recording/reproducing apparatus 1b in the standby mode monitors for the power-on operation in Step R1 . When the apparatus exits the standby mode at power-on, an operation flow proceeds from Step R1 to Step R2 to determine on that the apparatus is not in the video record mode or the reproducing mode. If the apparatus is in neither of the video record mode and the reproducing mode but in the television mode, the operation flow proceeds to Step R3 as skipping Step R2 (No). In Step R3, determination is made as to whether or not the currently selected channel is a broadcasting channel on which television programs can be received and on which some television programs designated by the recorded-program reproducing conditions are broadcast.

If the broadcasting channel of the designated television program is selected so that a broadcast program on this channel is displayed on the monitor unit 12, the operation flow proceeds from Step R3 to Step R4 where determination is made as to whether it is time to broadcast the designated program or not. If it is time to broadcast the designated program, the operation flow proceeds from Step R4 to Step R5. Thus, a recorded program of interest is reproduced from the HDD 15 according to the program reproducing schedule. The recorded program so reproduced is sent from the video-record/reproducing processor 16 to the signal switching/synthesizing portion 9. The image and audio monitor outputs from the monitor output controller constituted by the signal switching/synthesizing portion 9, the image output portion 10 and the audio output portion 11 are changed from monitor outputs of the broadcast program being received to monitor outputs of the recorded program so reproduced. Thus, the recorded program in the HDD 15 instead of the television program the viewing of which is not desired, for example, is displayed on the monitor unit 12 as if the recorded program were televised.

If the user mistakenly tries to record the recorded program during the reproducing thereof, Steps R6 and R7 disallow the recording operation.

Then, a loop operation starting from Step R6 or Step R7 and looping back to Step R4 via Steps R8 and R9 is performed for continuing to reproduce the recorded program from the HDD 15 in place of the designated television program.

If the power-off operation is detected in Step R8 during the on-going reproducing and display of the recorded program, the operation flow proceeds to Step R10, where the reproducing via the HDD 15 is terminated and the apparatus is shifted back to the standby mode. Then, the operation starting from Step R1 is repeated. If the so-called channel selection operation is performed in Step R9 to change the receiver channels, the operation flow returns from Step R9 to Step R3. Then, the operation starting from Step R3 is repeated.

At the end of the broadcast period of the designated television program (exactly when the broadcast time is close to the end), the operation flow proceeds to Step R11 of FIG.11 as skipping Step R4 (No).

At this time, if the reproducing of the recorded program is still going on and the program has not yet come to the end, the operation flow proceeds from Step R11 to Step R12 where a reproducing continuation selection window installed in the processor for generating and storing program reproducing schedule 19, for example, is displayed on the monitor unit 12 as superimposed on a part of the on-screen image of recorded program, thereby prompting the user to make decision on whether the reproducing of the recorded program is to be continued or not.

If the reproducing continuation is selected via the remote controller 3b or the like, the operation flow proceeds from Step R13 to Step R14 to continue the reproducing and display of the recorded program. If the user mistakenly tries to record the recorded program during the reproducing thereof, Steps R15 and R16 disallow the recording operation.

A loop operation starting from Step R15 or Step R16 and looping back to Step R13 via Step R17 is performed for continuing the reproducing and display of the recorded program. At the end of the reproducing, the operation flow proceeds from Step R17 to Step R18 to terminate the reproducing via the HDD 15. In the subsequent Step R19, determination is made as to whether the power-off operation is performed or not. If the power-off operation is performed, the operation flow returns to Step R10 of FIG.10 to shift back the apparatus to the standby mode. If not, the operation flow proceeds to Step R3 of FIG.10 to start the operation therefrom.

On the other hand, in a case where the reproducing of the recorded program is terminated at the end of the period of the designated television program, or at time before or after the broadcast time of the designated television program, the HDD 15 is not engaged in the reproducing. Hence, the operation flow proceeds to Step R20 as skipping Step R11 (No) of FIG.11. In Step R20, the signal switching/synthesizing portion 9 switches the image and audio monitor outputs from the image output portion 10 and the audio output portion 11 back to monitor outputs of a broadcast program being received, whereby the broadcast program on the receiver channel is displayed on the monitor unit 12. In a case where it is determined in Step R3 of FIG.10 that the selected receiver channel is not the channel of the designated television program, as well, the operation flow proceeds from Step R3 to Step R20 of FIG.11, and a television program on the selected receiver channel is displayed on the monitor unit 12.

If the user decides to record the broadcast program displayed as received on this selected receiver channel, the operation flow proceeds from Step R20 to Step R22 via Step R21. A loop operation including Steps R22 and R23 is performed to shift the apparatus to the video record mode so that the television program of interest is recorded in the HDD 15.

When this recording operation is terminated, the operation flow proceeds from Step R23 to Step R24 to determine whether the power-off operation is performed or not. Subsequently, the operation flow proceeds to Step R25 to determine whether the change of receiver channels is made or not.

If the receiver channels are changed, the operation flow proceeds from Step R25 to Step R3 of FIG.10. Then, the operation starting from Step R3 is repeated.

On the other hand, if the change of receiver channels is not made, the operation flow proceeds from Step R25 to Step R26 where determination is made as to whether or not the broadcast program displayed as received on the selected channel corresponds to a reproducing time of a recorded program in the program reproducing schedule, the recorded program scheduled on the selected channel.

The broadcast program on the receiver channel is displayed till the reproducing time of the recorded program while the operation flow returns to Step R21 to repeat the operation starting from Step R21. At the reproducing time of the recorded program, the operation flow returns from Step R26 to Step R3 of FIG.10. Then, the operation starting from Step R3 is repeated for reproducing the recorded program from the HDD 15 and displaying the program.

If a need for the video recording operation, reproducing operation or timer recording operation arises in Step R2 of FIG.10, the operation flow proceeds from Step R2 to Step R27 to shift the apparatus to the video record mode or the reproducing mode. Then, a loop operation including Steps R27 and R28 is performed whereby a broadcast program on the receiver channel or a program inputted from the external apparatus is recorded in the HDD 15, or the normal recording is performed for reproducing any selected recorded program from the HDD 15. At this time, the signal switching/synthesizing portion 9 switches the image and audio monitor outputs from the digital recording/reproducing apparatus 1b to either the image and audio monitor outputs of the program recorded in the HDD 15 or the image and audio monitor outputs of the recorded program reproduced from the HDD 15. After the end of the video recording or program reproducing operation, the operation flow proceeds from Step R28 to Step R29. If the power-off operation is performed, the operation flow proceeds from Step R29 to Step R10 where the apparatus is shifted back to the standby mode. Otherwise, the operation flow proceeds from Step R29 to Step R3.

### <Summary>

According to the embodiment, when the broadcast time of the designated program comes in a state where the broadcasting channel of the designated program is selected as the receiver channel, the designated program on the broadcasting channel is not viewed but the recorded program reproduced from the HDD 15 is displayed on the monitor unit 12 according to the program reproducing schedule (video program schedule) overwritably retained by and installed in the processor for generating and storing program reproducing schedule 19.

In this case, the user may designate the broadcast program the viewing of which is not desired, so that the recorded program may be reproduced from the storage device and displayed instead of the broadcast program. In the case where the receiver channel is changed as skipping the free channels, as well, the recorded program may be reproduced from the HDD 15 for viewing. Thus, the disadvantage associated with the use of the free television-broadcast channels may be solved. The effective use of the recorded programs may be achieved by minimizing the dead storage of the recorded programs.

In this case, if plural broadcasting channels are designated and the recorded programs in the HDD 15 are allocated to the individual broadcasting channels, the recorded programs may be reproduced on the individual broadcasting channels at the broadcast times of the designated programs on the broadcasting channels. The reproducing of the recorded programs is performed according to the program reproducing schedule. This approach is particularly effective in cases where the HDD 15 stores a large number of recorded programs and where the recorded programs are classified into specific categories and are reproduced for viewing on a per-category basis. With the increase of viewing chances, the chances to delete the unwanted recorded programs from the HDD 15 are also increased. This of course leads to the merit of ensuring the free space in the HDD 15.

It is noted that the invention is not limited to the foregoing embodiments and various changes and modifications other than the above may be made thereto so long as such changes and modifications do not deviate from the scope of the invention. For instance, the invention may also be applied to a case where the storage device is a DVD, video tape or the like. Furthermore, the invention may also be applied to a case where the storage device uses plural recording media including all of the HDD, DVD, video tape and the like, or including some of the above.

As a matter of course, the invention is also applicable to a complex-type recording/reproducing apparatus wherein the monitor unit 12 is incorporated in the main unit 2a, 2b, for example.

The individual parts of the apparatus may of course have different constitutions from those of the above two embodiments.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within the true scope of the invention.

The dead storage of recorded programs stored in a storage device of a recording/reproducing apparatus is minimized to achieve an effective use of the recorded programs.

At power-on, the recording/reproducing apparatus (system controller 5a, video-record/reproducing processor 16) endlessly reproduces the recorded programs from an HDD 15 till power-off, as giving priority to the control of video recording and reproducing operations. A reproducing start position controller (reproducing condition setting portion 17a) overwritably stores a reproducing end position of the endless reproducing at power-off, and sets a reproducing start position of the endless reproducing to the previous reproducing end position so stored therein. When a free channel is selected as a receiver channel, a monitor output controller (signal switching/synthesizing portion 9, image output portion 10, audio output portion 11) provides monitor outputs of the recorded program subjected to the endless reproducing instead of outputting signals received on the free channel, whereby the recorded program is displayed.

## Claims

1. A recording/reproducing apparatus having functions to receive television broadcasts and to record or reproduce the received television programs and the like, and operating to record and store the television programs and the like in a storage device and to provide monitor outputs of the received television programs on a selected channel as giving priority to at least reproducing monitor outputs from said storage device, said apparatus comprising:
a recorded-program reproducing controller activated at power-on and endlessly reproducing the recorded programs from said storage device till power-off, as giving priority to the control of video-recording and reproducing operations;
a reproducing start position controller overwritably storing a reproducing end position of said endless reproducing at the power-off and setting a reproducing start position of said endless reproducing to said previous reproducing end position so stored; and
a monitor output controller which, in response to the selection of a free channel as a receiver channel, provides monitor outputs of the recorded programs subjected to said endless reproducing instead of outputting reception signals on the free channel.

2. The recording/reproducing apparatus according to Claim 1, wherein said free channels are more than one and the recorded programs in said storage device are allocated to said individual free channels so as to be endlessly reproduced on a per-free-channel basis.

3. A recording/reproducing apparatus having functions to receive television broadcasts and to record or reproduce received television programs and the like, and operating to record and store the received television programs and the like in a storage device and to provide monitor outputs of the received television programs on a receiver channel as giving priority to at least reproducing monitor outputs from said storage device, said apparatus comprising:
a program reproducing schedule generator which, referring to recorded-program reproducing conditions, generates a program reproducing schedule used for reproducing the recorded programs from said storage device at broadcast times of designated television programs, and which overwritably stores said program reproducing schedule;
a recorded-program reproducing controller which reproduces a recorded program of interest from said storage device according to said program reproducing schedule when a broadcast time of said designated program corresponding to the recorded program of interest comes in a state where a broadcasting channel of said designated program is selected as the receiver channel; and
a monitor output controller which provides monitor outputs of the recorded program reproduced from said storage device instead of outputting signals received on the broadcasting channel at the broadcast time of said designated program.

4. The recording/reproducing apparatus according to Claim 3, wherein said designated broadcasting channels are more than one and the recorded programs in said storage device are allocated to said individual broadcasting channels based on said recorded-program reproducing conditions.
